# EUROPÄISCHE PATENTSCHRIFT

(11) **EP 1 337 001 B1**
(45) Veröffentlichungstag und Bekanntmachung des Hinweises auf die Patenterteilung: **30.07.2008**
(21) Anmeldenummer: 03006661.7
(22) Anmeldetag: 05.01.1998
(51) Int. Cl.: H01P 1/06, H04B 5/00, H01F 38/14

(54) **Vorrichtung zur kontaktlosen Übertragung elektrischer Signale und/oder Energie**
Device for contactless transmission of electrical signals and /or energy
Dispositif pour la transmission sans contact des signaux électriques et/ou énergie

(30) Priorität: 03.01.1997 DE 19700110; 16.01.1997 DE 19701357
(43) Veröffentlichungstag der Anmeldung: 20.08.2003
(62) Teilanmeldung aus: 98907894.4
(73) Patentinhaber: Schleifring und Apparatebau GmbH, 82256 Fürstenfeldbruck (DE)
(72) Erfinder: Lohr, Georg, 82223 Eichenau (DE)
(74) Vertreter: Lohr, Georg

(56) Entgegenhaltungen:
- EP-A- 0 180 213
- EP-A- 0 707 388
- FR-A- 2 092 709
- US-A- 4 516 097
- US-A- 4 939 400
- PATENT ABSTRACTS OF JAPAN vol. 004, no. 145 (E-029), 14. Oktober 1980 (1980-10-14) & JP 55 097749 A (KOKUSAI ELECTRIC CO LTD), 25. Juli 1980 (1980-07-25)

## Beschreibung

### Technisches Gebiet

Die Erfindung bezieht sich auf eine Vorrichtung zur kontaktlosen Übertragung elektrischer Signale und/oder Energie zwischen wenigstens zwei relativ zueinander beweglichen Teilen, bei der an wenigstens einem Teil eine Vielzahl definierter elektromagnetischer Koppelelemente vorgesehen ist, deren Nahfeld die kontaktlose Übertragung bewirkt.

Derartige Vorrichtungen werden zur Übertragung von elektrischen Signalen bzw. elektrischer Energie zwischen zwei oder mehr relativ zueinander beweglichen Teilen eingesetzt. Die Bewegung kann dabei eine rotatorische, eine translatorische oder eine zusammengesetzte Bewegung sein.

Der Übersichtlichkeit halber wird in der vorliegenden Beschreibung nicht zwischen der Übertragung zwischen gegeneinander beweglichen Einheiten und einer feststehenden und dazu beweglichen Einheiten unterschieden, da dies nur eine Frage des Ortsbezugs ist, und keinen Einfluß auf die Funktionsweise der erfindungsgemäßen Vorrichtung hat. Ebenso wird nicht weiter zwischen der Übertragung von Signalen und Energie unterschieden, da die Wirkungsmechanismen gleich sind.

### Stand der Technik

Bei translatorisch und insbesondere linear beweglichen Einheiten wie Kran- und Förderanlagen sowie bei drehbaren Einheiten wie Radaranlagen oder auch Computertomographen ist es notwendig, zwischen gegeneinander beweglichen Einheiten bzw. einer feststehenden und wenigstens einer dazu beweglich angeordneten Einheit elektrische Signale bzw. Energie zu übertragen.

Beispielsweise dann, wenn die Relativgeschwindigkeit der Einheiten vergleichsweise hoch ist, ist es von Vorteil, wenn die Übertragung kontaktlos erfolgt. Eine kontaktlose Übertragung hat darüberhinaus gegenüber einer kontaktierenden Übertragung beispielsweise mittels Schleifkontakten Vorteile, wenn bei der Übertragung digitaler Signale hohe Datenraten übertragen werden sollen bzw. für die Übertragung analoger Signale hohe Bandbreiten erforderlich sind:

Bei herkömmlichen (kreisförmigen) Schleifringen begrenzt der Durchmesser des Schleifrings die maximal übertragbare Frequenz. Diese ist dann erreicht, wenn der Schleifring-Umfang einer halben Wellenlänge der zu übertragenden Signale entspricht.

Vorrichtungen zur kontaktlosen Übertragung von Signalen bzw. elektrischer Energie sind in den verschiedensten Ausführungen bekannt. Hierzu wird u.a. auf das bekannte Lehrbuch Meinke/Gundlach "Taschenbuch der Hochfrequenztechnik" Springer-Verlag, Berlin, 1968, Seite 186 (Resonanzübertrager) verwiesen.

Eine hierauf aufbauende Vorrichtung zur kontaktlosen Übertragung elektrischer Signale und/oder Energie zwischen wenigstens zwei relativ zueinander beweglichen Teilen, von der bei der Formulierung des Oberbegriffs der Patentansprüche 1 bzw. 3 ausgegangen wird, ist aus der DE 42 36 340 C2 bekannt. Bei der aus dieser Druckschrift bekannten Anordnung zur induktiven Übertragung von Energie im Bereich mittlerer Frequenzen von einer auf einem Stator angeordneten Primärspule auf einen mit wenigstens einer Sekundärspule ausgestatteten Verbraucher besteht die Primärspule aus in Gruppen von in Reihe geschalteten Spulen, wobei pro Gruppe ein Kondensator in Reihe geschaltet ist. Alle Gruppen sind jeweils parallel an eine Mittelfrequenzsammelleitung angeschlossen, wobei die Impedanzen jeder Spulengruppe und des jeweiligen Kondensators so bemessen sind, daß bei induktiver Kopplung einer Gruppe an einen der bewegbaren Verbraucher die Resonanzbedingung für diese Gruppe zumindest annähernd erfüllt ist.

Diese bekannte Vorrichtung ist zwar für die Übertragung elektrischer Energie sehr gut geeignet, aufgrund der Tatsache, daß sie als Resonanzübertrager arbeitet, ist sie jedoch nicht für die breitbandige Übertragung elektrischer Signale geeignet. Darüberhinaus kann sie aufgrund der räumlichen Anordnung der Spulen nicht bei Arbeitsfrequenzen im MHz Bereich und darüber eingesetzt werden. Dies schließt einen Einsatz beispielsweise in Computertomographen aus.

Eine insbesondere zum Einsatz in Computertomographen gedachte Vorrichtung zum Übertragen elektrischer Signale zwischen zwei längs einer Strecke relativ zueinander beweglichen, insbesondere relativ zueinander drehbaren Teilen, mit denen eine Sender- bzw. eine Empfängeranordnung verbunden ist, ist aus der DE 33 31 722 A1 bekannt. Diese bekannte Vorrichtung weist an jedem Teil Koppelelemente auf, von denen jedes wenigstens eine Elektrode enthält, so daß das Signal kapazitiv über die jeweils gegenüberstehenden Elektroden übertragen wird.

Diese aus dem Jahre 1983 stammende Vorrichtung hat jedoch ebenfalls den Nachteil, daß sie nicht geeignet ist, Signale mit der derzeit für Computertomographen erforderlichen Bandbreite zu übertragen, da an den Koppelelementen bereits bei niedrigen Frequenzen Reflexionen auftreten. Abhilfe würde zwar die Verwendung von getrennten Verstärkern für jedes Koppelelement schaffen, die Verwendung einer Vielzahl von Verstärkern führt jedoch zu einem hohen Kostenaufwand.

Darüberhinaus führt die Struktur über die offenen Koppelelemente zu einer sehr hohen elektromagnetischen Störstrahlung.

Aus der DE-OS 26 53 209 ist eine koaxiale Mehrfachdrehkupplung zur Übertragung von Hochfrequenzenergie bekannt, bei der ebenfalls Koppelelemente in Form von Kondensatorplatten verwendet werden, die immer zu 100% im Eingriff sind. Hierdurch ergibt sich zwar ein reflexionsfreier und damit breitbandiger Abschluß.

Der Aufbau der Drehkupplung ist aber insbesondere dann, wenn diese einen großen Durchmesser haben soll, wie es beispielsweise bei Computertomographen erforderlich ist, kompliziert und damit kostenaufwendig.

Aus der DE 44 12 958 A1 und der DE 195 33 819 A1 sind weitgehend ähnliche Vorrichtungen und Verfahren für eine Kommunikation mit hoher Datenrate, insbesondere in einem Computertomographie-System bekannt:

Hierzu wird beispielsweise in einem Computertomographen mittels eines Kopplers elektrische Energie aus einer Übertragungsleitung ausgekoppelt, wobei die Leitung selbst die Funktion des Kopplers übernimmt, also in gleicher Weise wie eine Leckleitung in der Nachrichtentechnik wirkt. Hierzu wird auf das bereits genannte Lehrbuch Meinke/Gundlach, Seite 304 (Stichwort: gekoppelte Leitungen) verwiesen.

Diese bekannten Vorrichtungen weisen damit keine Vielzahl definierter Koppelelemente, sondern lediglich eine Streifenleitung auf, so daß sie einer anderen Gattung als im Oberbegriff der Patentansprüche 1 bzw. 3 vorausgesetzt angehören. Der Nachteil einer solchen Streifenleitung ist die breitbandige Abstrahlung hochfrequenter Energie von der als Koppler dienenden Leitung:

Die Leitung kann beispielsweise in Computertomographen eine Länge von bis zu 4m und in Förderanlagen ein Vielfaches davon besitzen. Daher ist sie bereits bei geringer Fehlanpassung ein Strahler mit sehr niedriger unterer Grenzfrequenz. Ebenso ist sie aufgrund ihrer Ausdehnung sehr empfindlich gegen externe Störungen. Diese werden von der Leitung empfangen und an alle anderen Einheiten weitergeleitet.

Der in der DE 195 33 819 A1 beschriebene Schirm bringt nur eine geringfügige Verbesserung. Anstelle der beschriebenen Dämpfung von maximal 55 dB ist in Versuchen lediglich eine breitbandige Dämpfung von 10 dB mit Spitzenwerten von 20 dB ermittelt worden.

Ein weiterer Nachteil dieser bekannten Verfahren und Vorrichtungen ist, daß im Falle einer Einkopplung von Signalen durch die relativ beweglichen Einheiten in die Leitung nur wenig Energie Übertragen werden kann. So müßte zur Verbesserung der Verkopplung die Oberfläche der Leitung vergrößert werden. Dies führt zu einer niedrigen Leitungsimpedanz und damit zu einer erhöhten Störempfindlichkeit.

In der US 4,939,400 ist ein induktiver Übertrager offenbart, bei dem die Koppelinduktivität mittels Kapazitäten zu Resonanzkreisen ergänzt sind.

### Darstellung der Erfindung

Der Erfindung liegt die Aufgabe zugrunde, eine Vorrichtung zur kontaktlosen Übertragung elektrischer Signale und/oder Energie zwischen wenigstens zwei relativ zueinander beweglichen Teilen anzugeben, die bei großer Bandbreit bzw. hohen möglichen Datenraten eine geringe Störempfindlichkeit aufweist.

Eine erfindungsgemäße Lösung dieser Aufgabe ist in dem unabhängigen Patentanspruch 1 angegeben. Weiterbildungen der Erfindung sind Gegenstand der abhängigen Ansprüche. Eine Vorrichtung nach dem Oberbegriff von Anspruch 1 ist aus der Patentschrift US-A-4 516 097 bekannt.

Bei der im Anspruch 1 angegebenen erfindungsgemäßen Lösung bilden die Koppelelemente an wenigstens einem Teil eine als Kaskadenschaltung ausgebildete Leiterstruktur, die reflexionsfrei abgeschlossen ist. Weiterhin ist jedes Koppelelement unabhängig von den anderen Koppelelementen an diesem Teil ein Resonanzsystem mit einer Resonanzfrequenz, die größer als die größte Frequenz der zu übertragenden breitbandigen Signale ist.

Unter "Resonanzsystem" bzw. "resonanzfähig" wird im Falle der vorliegenden Erfindung eine zur Signalübertragung bzw. Filterung nutzbare Resonanz verstanden.

Unter Kaskadenschaltung wird im Rahmen der vorliegenden Erfindung der allgemeine Fall einer Verschaltung von Vierpolen verstanden, jedoch keine einfache Serienoder Parallelschaltung. Ein Beispiel für eine Kaskadenschaltung ist der Fall, daß das nachfolgende Koppelelement als Eingangssignal die Spannung bzw. den Strom an wenigstens einem Blindelement des vorigen Koppelelements abgreift.

Insbesondere hat das von den Koppelelementen gebildete System eine Tiefpaßcharakteristik. Damit hat das Leitungssystem bei niedrigen Frequenzen Leitungseigenschaften und besitzt bei hohen Frequenzen eine sehr hohe Dämpfung, so daß die erfindungsgemäße Vorrichtung eine sehr große Störfestigkeit aufweist. Unter niedrigen Frequenzen wird hierbei ein zur Übertragung von Signalen nutzbares Frequenzband verstanden, das im Bereich bis zu einigen 100 MHz bis GHz liegen kann. Erfindungswesentlich ist dabei die Eigenschaft, daß durch die Dimensionierung ein zur Übertragung nutzbares Frequenzband, beispielsweise 0-300 MHz selektiert werden kann, Frequenzen oberhalb dieses Frequenzbandes werden stark unterdrückt.

In jedem Falle ist es bevorzugt, wenn die Leiterstruktur als Gesamtheit nicht resonanzfähig ist. Hiermit ist gemeint, daß zwar die Resonatoren, nicht jedoch die Leiterstruktur in dem zur Übertragung genutzten Frequenzband eine Resonanzfrequenz haben.

Beispielsweise hätte eine 100 m lange Leiterstruktur, die Resonatoren mit einer Resonanzfrequenz von 300 MHz enthält, selbst eine Resonanz bei ca. 3 MHz. Diese Resonanz soll nicht zur Informationsübertragung verwendet werden und wird vorteilhafter Weise unterdrückt.

Hierdurch wird die störenden Abstrahlung über die Leiterstruktur minimiert.

Bei beiden erfindungsgemäßen Lösungen erfolgt die Verkopplung der relativ zueinander beweglichen Teile mit einer Vielzahl definierter elektromagnetischer Koppelelemente, die untereinander mit einer Leitung bzw. einer Leiterstruktur verbunden sind, die reflexionsfrei abgeschlossen ist, also einen definierten und angepaßten Wellenwiderstand aufweist. Damit wird in jedem Falle der beim Stand der Technik vorhandene Nachteil der direkten Beeinflussung der Leitung vermieden.

U. a. können damit das Leitungssystem als Mittel zur Übertragung der Signale und die Koppelelemente als Mittel zur Signalkopplung jeweils für sich optimiert werden. Das Leitungssystem kann hier aus einer einzigen Leitung oder auch aus einer Vielzahl miteinander verbundener Leitungen bestehen, welche auch entsprechend dem Stand der Technik verschaltet sein können.

Dabei ist es bevorzugt, wenn der Aufbau symmetrisch ist.

Die Verkopplung kann im allgemeinsten Fall durch elektromagnetische Felder und Wellen und insbesondere induktiv und/oder kapazitiv erfolgen. In speziellen Ausführungen können auch Verkopplungen über rein elektrische bzw. magnetische Felder erfolgen.

Weiterhin ist es bevorzugt, wenn jedes resonanzfähige Koppelelement aus einem Glied besteht, das wenigstens einen induktiv und einen kapazitiv wirkenden Bestandteil enthält.

Insbesondere kann jedes Koppelelement aus einer einzigen Induktivität und einer einzigen Kapazität bestehen. Diese Lösung ist technisch besonders einfach und erfordert einen geringen Dimensionierungsaufwand. Hier kann auch eine spezifische Kopplungsart vorgegeben werden. Bei der Ausführung mittels Kapazitäten erfolgt die Kopplung überwiegend durch elektrische Felder, bei der Ausführung mittels Induktivitäten dagegen durch magnetische Felder. Selbstverständlich ist es aber auch möglich, Koppelelemente zu verwenden, die Resonanzkreis höherer Ordnung enthalten, bei denen beispielsweise zwei Kapazitäten durch zwei parallel geschaltete Induktivitäten verbunden sind.

Die einzelnen Induktivitäten der verschiedenen Koppelelemente eines Teils sind - bei Verwendung einer einzigen Induktivität pro Koppelelement - bevorzugt in Reihe geschaltet, so daß die Grenzfrequenz des Tiefpasses leicht auf die gewünschte Frequenz insbesondere im Bereich von 100 bis 10 000 MHz einstellbar ist. Die in Reihe geschalteten Induktivitäten bilden damit selbst die Leiterstruktur und benötigen daher keine Sammelleitung wie beim Stand der Technik.

Für vorstehend genannten Frequenzbereich ist es weiterhin von Vorteil, wenn eine durchgehende und insbesondere eine "gerade" Leitung die einzelnen Induktivitäten bildet.

In jedem Falle können die Induktivitäten bzw. Kapazitäten als Strukturen einer Leiterplatte ausgebildet sein, so daß sich ein besonders einfacher und kostengünstiger Aufbau ergibt, der darüberhinaus in einfacher Weise eine Anpassung an die jeweilige Geometrie der sich relativ zueinander bewegenden Teile erlaubt.

Dem dient auch, wenn die Leiterplatte eine flexible Platte ist, da eine derartige Platte - insbesondere dann, wenn sie eine spezielle Geometrie, wie beispielsweise Schlitze aufweist - leicht in nahezu beliebige Formen bringbar ist. Die Verwendung einer geschlitzten Leiterplatte ist dagegen bei Streifenleitungen naturgemäß nicht möglich.

Beim Aufbau der erfindungsgemäßen Vorrichtung mit einer Leiterplatte ist es ferner möglich, daß die Kapazitäten als flächige leitende Elemente auf der (flexiblen) Leiterplatte ausgebildet sind. Die flächigen leitenden Elemente können über Stichleitungen mit der durchgehenden Leitung verbunden sein oder direkt an diese seitlich anschließen. Weiterhin ist es möglich, daß beidseits der durchgehenden Leitung flächige leitende Elemente vorgesehen sind.

Insbesondere können auf beiden Seiten der Leiterplatte Leiterstrukturen mit einer Massefläche, Kapazitäten und/oder Induktivitäten vorgesehen sein.

Selbstverständlich ist es auch möglich, daß die Induktivitäten und/oder die Kapazitäten diskrete Elemente sind. Auch eine Kombination von diskreten Elementen und auf einer Leiterplatte realisierten Elementen ist möglich.

Bei einer weiteren Ausgestaltung der Erfindung sind mehrere auf unterschiedliche Frequenzbereiche abgestimmte Koppelelemente räumlich nahe beieinander angeordnet sind, so daß sich eine auf diese Frequenzbereiche abgestimmte Koppelstruktur ergibt. Hierdurch ist sowohl eine breitbandige Übertragung als auch eine mehrkanalige Übertragung in mehreren unabhängigen Frequenzbändern möglich. Dadurch ergibt sich eine Koppelstruktur, die eine selektive Kopplung in diesen vorgegebenen Frequenzbereichen ermöglicht. So kann z.B. in einer Anlage, die in den Frequenzbereichen 100 MHz und 900 MHz arbeitet, eine Kombination aus diskreten Resonanzkreisen für das untere Frequenzband, sowie Leitungsresonatoren für das obere Frequenzband eingesetzt werden. Durch diese Kombination kann eine erhöhte Störunterdrückung im Bereich zwischen diesen beiden Frequenzbändern erreicht werden.

Bei einer weiteren Ausgestaltung der Erfindung werden mehrere Koppelelemente derart kombiniert, daß sich nach außen hin ein vorbestimmtes Strahlungsdiagramm ergibt. Dies kann nach den allgemein bekannten Regeln zur Dimensionierung von Antennen und Strahlergruppen erfolgen. Damit kann die Abstrahlung unerwünschter Energie in Bereiche, die besonders empfindlich sind, minimiert werden.

Die Ausgestaltung, bei der die Koppelelemente als Differenzkoppelelemente ausgebildet sind, und bei der ein Differenzsignal an die Koppelelemente angelegt ist, ermöglicht eine besonders störsichere Signalübertragung.

Hierzu sind mindestens zwei Koppelelemente mit Differenzsignalen aus zwei Differenzsignale führenden Leitungen oder über eine symmetrierende Anpassungsschaltung wie Symmetrierübertrager zu speisen.

Bei der erfindungsgemäßen Vorrichtung können an allen Teilen einander angepaßte, resonanzfähige Koppelelemente vorgesehen sein. Ferner ist es auch möglich, daß lediglich an einem Teil resonanzfähige Koppelelemente vorgesehen sind, und daß an den anderen Teilen als Koppelelemente herkömmliche Sender bzw. Empfänger vorgesehen sind. Beispielsweise können die Sender bzw. Empfänger Spulen, Ferritkerne und/oder Kondensatoren aufweisen.

Weiterhin können die herkömmlichen Koppelelemente als dem Stand der Technik entsprechende Antennen (Strahler) ausgebildet sein. Diese können beispielsweise als planare Antennen in Streifenleitungstechnik oder auch als Stabantennen bzw. Rahmenantennen ausgebildet sein.

Bei einer vorteilhaften Ausgestaltung der Erfindung werden im Falle einer bevorzugten Signalflußrichtung die erfindungsgemäß ausgebildeten Koppelelemente auf der Senderseite und herkömmliche Koppelelemente auf der Empfangsseite angeordnet. Eine solche bevorzugte Signalflußrichtung existiert beispielsweise, wenn genau ein Sender und mindestens ein Empfänger vorhanden sind, oder wenn in genau einer Richtung eine möglichst hohe Übertragungsqualität gefordert ist. Eine Verbindung auf den Pfad erfindungsgemäßes Koppelelement - Koppelelement - Leitungssystem - Koppelelement - erfindungsgemäßes Koppelelement hat die niedrigste Übertragungsqualität. Hier treten zweimal die Koppeldämpfungen des Überganges herkömmliches Koppelelement - erfindungsgemäßes Koppelelement sowie die Verluste im Leitungssystem auf. Besser ist die Verbindung herkömmliches Koppelelement - erfindungsgemäßes Koppelelement - Leitungssystem, da hier die Verluste des Überganges herkömmliches Koppelelement - erfindungsgemäßes Koppelelement nur einmal auftreten. Am besten ist jedoch die Verbindung Leitungssystem - erfindungsgemäßes Koppelelement - herkömmliches Koppelelement, da hier das unverstärkte Signal lediglich die Dämpfung der Strecke Koppelelement - erhöht. So kann das um diesen Dämpfungsfaktor (z. B. 10 dB) abgeschwächte Signal direkt wieder in dem herkömmliches Koppelelement verstärkt werden. Im Leitungssystem wird noch das Originalsignal mit hohem Pegel geführt. Auf dem umgekehrten Signalweg (herkömmliches Koppelelement - erfindungsgemäßes Koppelelement - Leitungssystem) wird das gedämpfte Signal im Leitungssystem geführt, wo es durch andere Signale aufgrund seines niedrigeren Pegels leichter gestört werden kann. Aus dieser Betrachtung ergibt sich, daß die beste Übertragungsgüte eines Signals auf der Strecke Leitungssystem - erfindungsgemäßes Koppelelement - herkömmliches Koppelelement erreicht werden kann.

Bei der erfindungsgemäßen Vorrichtung ist es weiterhin von Vorteil, wenn zur Einspeisung der zu übertragenden Signale bzw. der Energie bzw. zur Weiterleitung der übertragenen Signale bzw. Energie dienenden Leitungssysteme geschirmt und damit von den Koppelelementen entkoppelt ausgeführt sind, so daß die Abstrahlung über die Zuleitungssysteme und die Aufnahme von Störenergie minimiert wird. Erfindungsgemäß genügt eine Ausgestaltung der Vorichtung derart, daß die Koppelelemente den überwiegenden Anteil an der Kopplung besitzen. Eine geringe restliche Verkoppelung der beweglichen Koppeleinrichtungen mit dem Leitungssystem ist in der Regel nicht schädlich. Dennoch kann es in bestimmten Fällen sinnvoll sein, die Leitung vollständig zu schirmen. Dies ist insbesondere dann der Fall, wenn nur eine schmalbandige Einkopplung in die Leitung erwünscht ist und in der Umgebung breitbandig hohe Störpegel auftreten.

Ferner ist es möglich, wenigstens eine Aktivierungseinheit vorzusehen, die erst bei Annäherung der Koppelelemente eines relativ bewegten Teil das jeweilige Koppelelement an dem Teil aktiviert, an den sich der relativ bewegte Teil annähert.

Bei einer weiteren vorteilhaften Ausgestaltung der Erfindung wird der Arbeitsbereich der Koppelemente an die Übertragungsaufgabe angepaßt. Im Falle von Resonatoren als Koppelelemente können diese so dimensioniert werden, daß sie erst bei Annäherung von an einem relativ bewegten Teil vorgesehenen Koppelelementen mit bestimmten dielektrischen oder magnetischen Eigenschaften ihre Soll-Resonanzfrequenz erhalten. Damit wird erreicht, daß erst bei Annäherung dieser Koppelelemente Energie abgegeben wird.

Sind die Koppelelemente weiter entfernt, so ist beispielhaft im Falle eines Resonators der Resonator verstimmt, strahlt keine Energie ab und belastet das Leitungssystem nicht. Ebenso kann ein verstimmter Resonator keine Energie bei seiner Arbeitsfrequenz in das Leitungssystem einkoppeln. Weiterhin können die Koppelelemente derart gestaltet werden, daß sie sich bei Annäherung unterschiedlicher Koppeleinrichtungen auf unterschiedliche Arbeitsbereiche abstimmen lassen. So können an einem relativ bewegten Teil vorgesehene Koppelelemente mit unterschiedlichen Dielektrizitätskonstanten die Koppelelemente auf unterschiedliche Arbeitsfrequenzen abstimmen.

In einer weiteren vorteilhaften Ausgestaltung der Erfindung besitzen die Koppelelemente eine Aktivierungseinrichtung, welche die Annäherung einer Koppeleinrichtung feststellt und im Falle einer Annäherung das jeweilige Koppelement aktiviert.

In einer weiteren Ausgestaltung der Erfindung werden die Koppelelemente durch zusätzliche aktive oder passive Bauteile mit dem Leitungssystem verkoppelt. Solche Bauteile können Halbleiter als Schalter oder auch Verstärker sein, die den Signalfluß steuern und/oder auch den Signalpegel anheben. Passive Bauteile zur Kopplung können Richtkoppler sein, die z.B. im Falle einer unidirektionalen Übertragung vom Leitungssystem den Signalfluß in die Koppelelemente zulassen, aber von außen durch die Koppelelemente eingekoppelte Störungen vom Leitungssystem fernhalten. Dies gilt auch für den Fall, daß Koppelelemente als Richtkoppler ausgeführt sind. Selbstverständlich können zur Entkopplung auch nichtreziproke Bauelemente wie Zirkulatoren eingesetzt werden.

In einer weiteren Ausgestaltung der Erfindung werden unterschiedliche Arten von Koppelelementen miteinander kombiniert. So kann z.B. an einer Stelle des Systems eine breitbandige Übertragung mit kapazitiven Koppelelementen und andernorts in einem gestörten Umfeld eine schmalbandige Übertragung mit Resonatoren erforderlich sein.

Ferner ist es möglich, daß die Koppelelemente durch einen Schirm aus elektrisch leitfähigem Material geschirmt werden. Dieser Schirm kann die Koppelelemente mit oder auch ohne das Leitungssystem oder Teile davon umfassen. Der Schirm hat seine beste Wirkung, wenn er die Koppelelemente möglichst weit umschließt.

### Kurze Beschreibung der Zeichnung

Die Erfindung wird nachstehend anhand der Zeichnungen näher beschrieben, in der zeigen:
- Fig. 1a bis 1c: den prinzipiellen Aufbau erfindungsge mäßer Vorrichtungen zur kontaktlosen Übertragung elektrischer Signale und/oder Energie,
- Fig. 2: ein erstes Ausführungsbeispiel der Erfindung mit kapazitiver Kopplung,
- Fig. 3: eine Abwandlung des in Fig. 2 gezeigten Ausführungsbeispiels mit symmetrische Anordnung mit Schirm,
- Fig. 4: ein zweites Ausführungsbeispiel mit induktiver Koppelung,
- Fig. 5: eine erfindungsgemäße Vorrichtung an einem Drehübertrager
- Fig. 6a und 6b: einen Vergleich zwischen einer Vorrichtung nach dem Stand der Technik und einer erfindungsgemäßen Vorrichtung bei der Differenzsignal-Übertragung,
- Fig. 7a und 7b: Darstellungen zur Erläuterung der Tiefpaß-Charakteristik, und

### Darstellung von Ausführungsbeispielen

In den folgenden Figuren sind gleiche bzw. gleich wirkende Elemente mit den selben Bezugszeichen versehen, so daß z.T. auf eine erneute Vorstellung verzichtet wird.

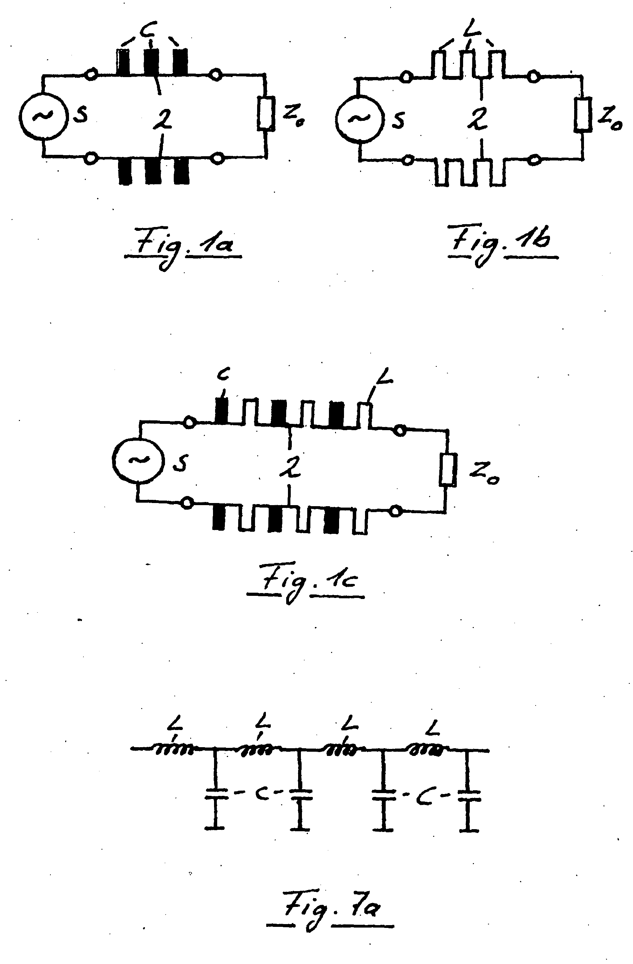

Die Fig. 1a bis 1c zeigen verschiedene Ausführungsformen der erfindungsgemäßen Vorrichtung zur kontaktlosen Übertragung elektrischer Signale und/oder Energie, wobei in den Figuren lediglich der Sender, und nicht der Empfänger dargestellt ist:

Eine Signalquelle S ist über eine Leiterstruktur 2 mit Koppelelementen C bzw. L verbunden und weiterhin mit einem Wellenwiderstand Z₀ reflexionsfrei abgeschlossen. Im Falle der Verwendung einer erfindungsgemäß aufgebauten Einheit als Empfänger wird an der Stelle der Signalquelle S das übertragene Signal abgegriffen. Die hier gezeigten Anordnungen sind symmetrisch ausgebildet, da es sich hierbei um eine besonders vorteilhafte Ausführungsform handelt. Selbstverständlich sind auch unsymmetrische Ausführungsformen möglich.

Fig. 1a zeigt ein Beispiel für die kapazitive Kopplung; hierbei sind an einem durchgehenden Leiter 2 über eine Stichleitung oder direkt wie bei dem gezeigten Ausführungsbeispiel flächige leitende Elemente C angesetzt, die die kapazitive Kopplung bewirken.

Fig. 1b zeigt ein Beispiel für die induktive Kopplung; hierbei bildet die Leiterstruktur 2 Schleifen und damit diskrete Elemente L, die die induktive Kopplung bewirken.

Fig. 1c zeigt ein Beispiel für die induktive und kapazitive Kopplung; hierbei sind sowohl Leiterschleifen L als auch flächige leitende Elemente C vorgesehen.

Die Erfindung wird nachstehend anhand der weiteren Figuren näher erläutert.

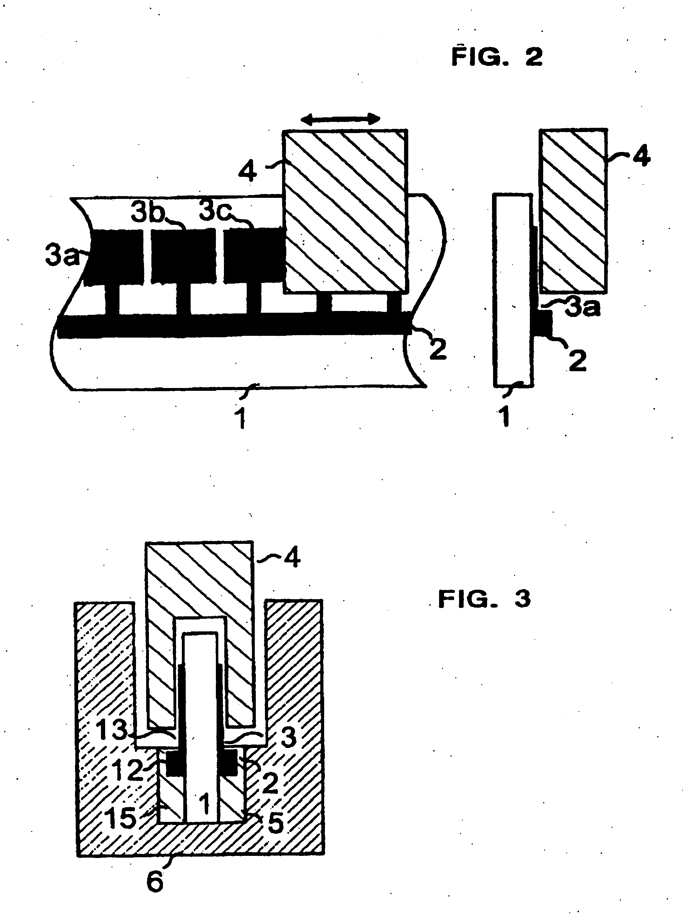

Figur 2 zeigt ein Ausführungsbeispiel mit kapazitiver Kopplung in unsymmetrischer Ausführung. Auf einem Träger 1, beispielsweise einer Leiterplatte, die insbesondere flexibel ausgebildet sein kann, befindet sich eine Leiterstruktur bzw. ein Leitungsnetz 2, das die kapazitiven Koppelelemente 3a, 3b und 3c miteinander verbindet.

Die Übertragung elektrischer Signale und/oder Energie erfolgt mittels dieser Koppelelemente und einer relativ zu diesen Koppelelementen bewegbaren Koppeleinrichtung 4, die als Empfänger dient. Bei der Koppeleinrichtung 4 kann es sich selbstverständlich um gleichartig ausgebildete Elemente, aber auch um herkömmliche Empfänger handeln. Bei dem gezeigten Ausführungsbeispiel - hierzu wird auf die Seitenansicht in Fig. 2 verwiesen - ist die Koppeleinrichtung 4 ein herkömmlicher Empfänger, der seitlich neben den Koppelelementen 3a bis 3c angeordnet ist. Auf der Rückseite der Leiterplatte kann optional eine Massefläche vorgesehen sein.

Fig. 3 zeigt in einem Querschnitt eine Abwandlung des in Fig. 2 gezeigten Ausführungsbeispiels, bei dem eine symmetrische Anordnung mit einer Schirmung vorgesehen ist. Die Vorrichtung weist ein symmetrisches Leitungssystem bzw. eine symmetrische Leitungsstruktur, bestehend aus einem ersten Leiter 2 und einem zweiten Leiter 12, auf. Diese speisen kapazitive Koppelelemente 3 und 13.

Die Koppeleinrichtung 4 ist hier als symmetrische Koppeleinrichtung ausgeführt, die die Leiterplatte 1, auf der die Leiterstrukturen und die Koppelelemente angeordnet sind, U-förmig umgibt. Ferner ist ein Schirm 6 vorgesehen, der die gesamte Anordnung umgibt. Der Träger 1, der wiederum eine Leiterplatte sein kann, ist dabei mittels Isolatoren 5 und 15 an dem Schirm 6 befestigt.

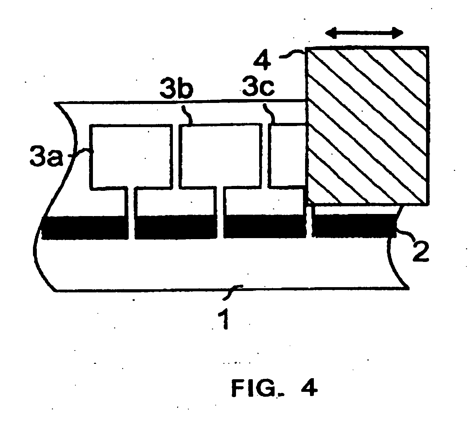

Figur 4 zeigt ein zweites Ausführungsbeispiel der Erfindung, bei dem eine induktive Kopplung erfolgt. Auf einem Träger 1, welcher auch auf der Rückseite mit einer elektrisch leitfähigen Schicht versehen sein kann, ist wiederum eine Leiterstruktur 2 vorgesehen, die induktive Koppelelemente 3a bis 3c verbindet. Die Koppelelemente 3a bis 3c sind hierbei in Art einer Leiterschleife ausgebildet. Mit 4 ist wieder eine Koppeleinrichtung herkömmlicher Art bezeichnet.

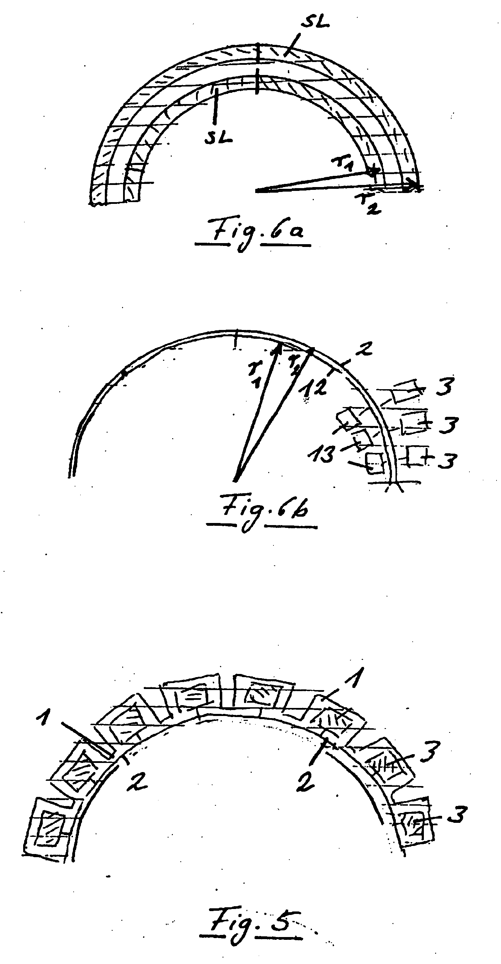

Die vorstehend anhand der Fig. 1 bis 4 beispielhaft erläuterte erfindungsgemäße Vorrichtung hat eine Reihe von Vorteilen, die nachstehend anhand der Fig. 5 bis 7 näher erläutert werden:

Fig. 5 zeigt ein Ausführungsbeispiel, bei dem die erfindungsgemäße Vorrichtung so ausgebildet ist, daß sie beispielsweise an einem Drehübertrager angebracht werden kann. Die erfindungsgemäß ausgebildete Leiterstruktur 2 mit kapazitiven Elementen 3 (und/oder induktiven Elementen) kann dabei aus einer ebenen Folie oder Leiterplatte 1 gefertigt werden, in die Schlitze eingebracht werden, die ein Biegen auf kleine Radien ermöglicht. Mit einer Streifenleitung, wie sie beim Stand der Technik verwendet wird, wäre dies nicht möglich.

Darüberhinaus hat die erfindungsgemäße Vorrichtung den Vorteil, daß sich bei einer gebogenen Anordnung und einer Differenzsignal-Kopplung nur gering unterschiedliche Leitungslängen ergeben, die zu einer Laufzeitdifferenz und damit zu Signalstörungen und zu unerwünschter Abstrahlung führen. Damit eignet sich die erfindungsgemäße Vorrichtung besonders für die Differenzsignal-Übertragung, die wiederum den Vorteil hat, daß die Abstrahlung nach außen aufgrund der sich im Außenraum praktisch vollständig kompensierenden Felder minimiert ist.

Fig. 6 zeigt einen Vergleich zwischen als Differenzstruktur ausgebildeten herkömmlichen Streifenleitungen SL (Teilbild a) und einer erfindungsgemäßen Vorrichtung (Teilbild b).

Wie die Figuren 6a und 6b zeigen, sind im Falle einer erfindungsgemäßen Vorrichtung die Leitungen 2 und 12 mit Koppelelementen 3 und 13sehr nahe beieinander, so daß die Differenz ihrer Radien r₁ und r₂ sehr klein ist. Damit ist auch der Längenunterschied und somit die Laufzeitdifferenz minimiert.

Im Falle der Streifenleitungen SL ist jedoch die Differenz der Radien r₁ und r₂ und damit auch die Laufzeitdifferenz vergleichsweise groß.

Fig. 7a zeigt ein vereinfachtes elektrisches Ersatzschaltbild einer erfindungsgemäßen Vorrichtung. Wie Fig. 7a zeigt, hat die erfindungsgemäße Vorrichtung eine Tiefpaßcharakteristik. Damit hat die erfindungsgemäße Vorrichtung den Vorteil hoher Störfestigkeit, da Störungen oberhalb der Grenzfrequenz nicht weitergeleitet und damit weder empfangen noch ausgesandt werden können.

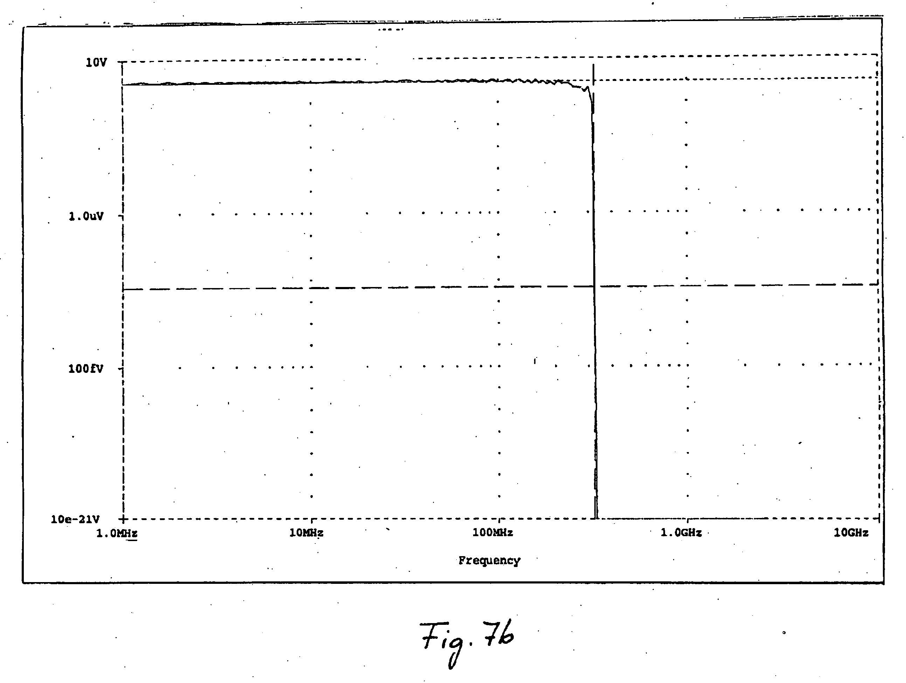

Den berechneten Frequenzgang einer erfindungsgemäßen Vorrichtung zeigt beispielhaft Fig. 7b, in der auf der Abszisse die Frequenz (in MHz) und auf der Ordinate das empfangene Signal (in V) aufgetragenen sind. Wie man sieht, hat die erfindungsgemäße Vorrichtung bei dem gezeigten Ausführungsbeispiel zwischen 1 MHz und nahezu 300 MHz einen praktisch konstanten Frequenzgang, der bei ca. 300 MHz steil auf "Null" abfällt. Selbstverständlich sind auch andere - höhere oder niedrigere - Grenzfrequenzen als 300 MHz realisierbar.

Vorstehend ist die Erfindung anhand von Ausführungsbeispielen ohne Beschränkung des allgemeinen Erfindungsgedankens und der allgemeinen Anwendbarkeit beschrieben worden. Insbesondere ist es möglich, die Erfindung nicht nur für Drehübertrager, wie beispielsweise in Computertomographen, Radartürmen, sondern auch für linear bewegliche Übertrager einzusetzen, wie sie in Kränen etc. benötigt werden. Auch kann die Erfindung bei Übertragern eingesetzt werden, die eine zusammengesetzte Bewegung ausführen.

## Patentansprüche

1. Vorrichtung zur kontaktlosen Übertragung elektrischer Signale und/oder Energie zwischen wenigstens 2 relativ zueinander beweglichen Teilen, welche eine Vielzahl elektromagnetischer Koppelelemente umfasst, deren Nahfeld die kontaktlose Übertragung bewirkt, und einen Träger (1) an einem der beweglichen Teile umfasst, der auf einer Seite eine Massefläche aufweist und auf der anderen Seite Koppelelemente als elektrisch leitende, flächige Elemente (3a, 3b, 3c) angebracht sind, welche über ein Leitungsnetz (2) in Kaskadenschaltung miteinander verbunden sind, und mit der elektrisch leitenden Massefläche Kapazitäten bilden,
**dadurch gekennzeichnet, dass**
die Kapazitäten zusammen mit den Induktivitäten des Leitungsnetzes eine Tiefpasscharakteristik aufweisen und die gesamte Anordnung reflexionsfrei abgeschlossen ist, und weiterhin jedes Koppelelement ein Resonanzsystem mit einer Resonanzfrequenz größer als die Frequenz der zu übertragenden Signale ist.

2. Vorrichtung nach Anspruch 1,
**dadurch gekennzeichnet, dass**
die Induktivitäten bzw. Kapazitäten als Strukturen einer Leiterplatte ausgebildet sind.

3. Vorrichtung nach Anspruch 2,
**dadurch gekennzeichnet, dass**
die Leiterplatte eine flexible Platte ist.

4. Vorrichtung nach einem der Ansprüche 1 bis 3,
**dadurch gekennzeichnet, dass**
die Leiterstruktur als Gesamtheit nicht resonanzfähig ist.

5. Vorrichtung nach einem der Ansprüche 1 bis 4,
**dadurch gekennzeichnet, dass**
eine durchgehende Leitung die einzelnen Induktivitäten der jeweiligen Koppelelemente bildet.

6. Vorrichtung nach einem der Ansprüche 1 bis 5,
**dadurch gekennzeichnet, dass**
die Kapazitäten als flächige leitende Elemente ausgebildet sind, die über Stichleitungen mit der durchgehenden Leitung verbunden sind oder direkt an diese seitlich anschließen.

7. Vorrichtung nach Anspruch 6,
**dadurch gekennzeichnet, dass**
beidseits der durchgehenden Leitung flächige leitende Elemente vorgesehen sind.

8. Vorrichtung nach Anspruch 2 oder 3,
**dadurch gekennzeichnet, dass**
die Leiterplatte Schlitze aufweist.

9. Vorrichtung nach einem der Ansprüche 1 bis 8,
**dadurch gekennzeichnet, dass**
die Induktivitäten und/oder die Kapazitäten diskrete Elemente sind.

10. Vorrichtung nach einem der Ansprüche 1 bis 9,
**dadurch gekennzeichnet, dass**
mehrere auf unterschiedliche Frequenzbereiche abgestimmte Resonatoren räumlich nahe beieinander angeordnet sind, so dass sich eine auf diese Frequenzbereiche abgestimmte Resonatorstruktur ergibt.

11. Vorrichtung nach einem der Ansprüche 1 bis 10,
**dadurch gekennzeichnet, dass**
der Aufbau symmetrisch ist.

12. Vorrichtung nach einem der Ansprüche 1 bis 11,
**dadurch gekennzeichnet, dass**
auf beiden Seiten einer Leiterplatte Leiterstrukturen mit einer Massefläche, Kapazitäten und/oder Induktivitäten vorgesehen sind.

13. Vorrichtung nach einem der Ansprüche 1 bis 12,
**dadurch gekennzeichnet, dass**
die Koppelelemente als Differenzkoppelelemente ausgebildet sind und dass ein Differenzsignal an die Koppelelemente angelegt ist.

14. Vorrichtung nach einem der Ansprüche 1 bis 13,
**dadurch gekennzeichnet, dass**
an allen Teilen einander angepasste, resonanzfähige Koppelelemente vorgesehen sind.

15. Vorrichtung nach einem der Ansprüche 1 bis 14,
**dadurch gekennzeichnet, dass**
lediglich an einem Teil resonanzfähige Koppelelemente vorgesehen sind, und daß an den anderen Teilen als Koppelelemente herkömmliche Sender bzw. Empfänger vorgesehen sind.

16. Vorrichtung nach Anspruch 15,
**dadurch gekennzeichnet, dass**
die Sender bzw. Empfänger Spulen, Ferritkerne und/oder Kondensatoren aufweisen.

17. Vorrichtung nach einem der Ansprüche 1 bis 16,
**dadurch gekennzeichnet, dass**
die zur Einspeisung der zu übertragenden Signale bzw. der Energie bzw. zur Weiterleitung der übertragenen-Signale bzw. Energie dienenden Leitungssysteme geschirmt und damit von den Koppelelementen entkoppelt ausgeführt sind.

18. Vorrichtung nach einem der Ansprüche 1 bis 17,
**dadurch gekennzeichnet, dass**
wenigstens eine Aktivierungseinheit vorgesehen ist, die erst bei Annäherung der Koppelelemente eines relativ bewegten, Teils das jeweilige Koppelelement aktiviert.

19. Vorrichtung nach einem der Ansprüche 1 bis 18,
**dadurch gekennzeichnet, dass**
die Resonatoren derart gestaltet sind, dass sie sich in ihren elektrischen Eigenschaften erst durch die dielektrischen oder magnetischen Eigenschaften eines sich annähernden Resonators an ihren Arbeitspunkt anpassen.

20. Vorrichtung nach einem der Ansprüche 1 bis 19,
**dadurch gekennzeichnet, dass**
die Kopplung der Koppelelemente durch zusätzliche aktive oder passive Bauelemente wie beispielsweise Verstärker und/oder Halbleiterschalter zum Leitungssystem erfolgt.

21. Vorrichtung nach einem der Ansprüche 1 bis 20,
**dadurch gekennzeichnet, dass**
die Koppelelemente durch einen Schirm aus elektrisch leitfähigem Material von der Umgebung abgeschirmt sind.

22. Vorrichtung nach einem der Ansprüche 1 bis 21,
**dadurch gekennzeichnet, dass**
die Koppelelemente von einem schaltenden bzw. verstärkenden Element gespeist werden.

23. Vorrichtung nach einem der Ansprüche 1 bis 22,
**dadurch gekennzeichnet, dass**
die relativ zueinander beweglichen Teilen eine rotatorische Bewegung ausführen.

24. Vorrichtung nach einem der Ansprüche 1 bis 23,
**dadurch gekennzeichnet, dass**
die relativ zueinander beweglichen Teile eine translatorische Bewegung ausführen.

25. Vorrichtung nach einem der Ansprüche 1 bis 24,
**dadurch gekennzeichnet, dass**
jedes resonanzfähige Koppelelement aus einem Glied besteht, das wenigstens einen induktiv und einen kapazitiv wirkenden Bestandteil enthält.

26. Vorrichtung nach Anspruch 25,
**dadurch gekennzeichnet, dass**
jedes Koppelelement aus einer einzigen Induktivität und aus einer einzigen Kapazität besteht.

27. Vorrichtung nach Anspruch 25,
**dadurch gekennzeichnet, dass**
die einzelnen Induktivitäten der Koppelelemente in Reihe geschaltet sind.

## Claims

1. Device for non-contacting transmission of electric signals and/or energy between at least two parts movable relative to one another, comprising a plurality of electromagnetic coupling elements whose near field causes the non-contacting transmission, and comprising a carrier (1) on one of the movable parts, which comprises a grounded surface on the one side, and has coupler elements in the form of electrically conductive, planar elements (3a, 3b, 3c) attached on the other side, which elements are connected with each other via a network (2) in cascade circuit and form capacitors with the electrically conductive grounded surface,
**characterized in that**
the capacitors together with the inductances of the network have a low-pass characteristic, and the entire arrangement is terminated in a manner free from reflection, and furthermore each coupler element is a resonance system with a resonance frequency higher than the frequency of the signals to be transmitted.

2. Device according to claim 1,
**characterized in that**
the inductances and capacitors are designed as structures of a printed circuit board.

3. Device according to claim 2,
**characterized in that**
the printed circuit board is a flexible board.

4. Device according to one of the claims 1 to 3,
**characterized in that**
the conductor structure in its entirety is not capable of resonating.

5. Device according to one of the claims 1 to 4,
**characterized in that**
a continuous conductor forms the individual inductances of the respective coupler elements.

6. Device according to one of the claims 1 to 5,
**characterized in that**
the capacitors are configured as flat conducting elements which are connected to the continuous conductor via branch lines, or directly joined to the conductor line laterally.

7. Device according to claim 6,
**characterized in that**
flat conducting elements are provided on either side of the continuous conductor.

8. Device according to claim 2 or 3,
**characterized in that**
the printed circuit board comprises slots.

9. Device according to one of the claims 1 to 8,
**characterized in that**
the inductances and/or capacitors are discrete elements.

10. Device according to one of the claims 1 to 9,
**characterized in that**
a plurality of resonators tuned to different frequency ranges are disposed to be spatially close to each other so as to provide a resonator structure which is tuned to these frequency ranges.

11. Device according to one of the claims 1 to 10,
**characterized in that**
the arrangement is symmetrical.

12. Device according to one of the claims 1 to 11,
**characterized in that**
conductor structures with a grounded surface, capacitors and/or inductances are provided on both sides of a printed circuit board.

13. Device according to one of the claims 1 to 12,
**characterized in that**
the coupler elements are configured as differential coupler elements; and that differential signal is applied to the coupler elements.

14. Device according to one of the claims 1 to 13,
**characterized in that**
mutually adjusted, resonating coupler elements are provided in all parts.

15. Device according to one of the claims 1 to 14,
**characterized in that**
resonating coupler elements are provided merely on one part, and that conventional transmitters and receivers are provided as coupler elements on the other parts.

16. Device according to claim 15,
**characterized in that**
the transmitters and receivers have coils, ferrite cores, and/or capacitors.

17. Device according to one of the claims 1 to 16,
**characterized in that**
the conductor systems used for feeding the signals or energy to be transmitted, or for relaying the transmitted signals or energy are shielded and thus are arranged to be decoupled from the coupler elements.

18. Device according to one of the claims 1 to 17,
**characterized in that**
at least one activator unit is provided which activates the respective coupler element only upon approach of the coupler elements of a part moved relative thereto.

19. Device according to one of the claims 1 to 18,
**characterized in that**
the resonators are configured in such a way that they adjust their electrical properties to their operating point only by the dielectric or magnetic properties of an approaching resonator.

20. Device according to one of the claims 1 to 19,
**characterized in that**
the coupling of the coupler elements to the conductor system is effected via additional active or passive components such as amplifiers and/or semiconductor switches.

21. Device according to one of the claims 1 to 20,
**characterized in that**
the coupler elements are shielded from the ambient environment by a shield made from electrically conductive material.

22. Device according to one of the claims 1 to 21,
**characterized in that**
the coupler elements are fed by a switching or amplifying element.

23. Device according to one of the claims 1 to 22,
**characterized in that**
the parts movable relative to one another perform a rotary movement.

24. Device according to one of the claims 1 to 23,
**characterized in that**
the parts movable relative to one another perform a translational movement.

25. Device according to one of the claims 1 to 24,
**characterized in that**
each coupler element capable of resonance consists of a member that contains at least one component acting in an inductive and a capacitive way.

26. Device according to claim 25,
**characterized in that**
each coupler element consists of a single inductance and a single capacitance.

27. Device according to claim 25,
**characterized in that**
the individual inductances of the coupler elements are connected in series.

## Revendications

1. Dispositif pour la transmission sans contact de signaux électriques et/ou d'énergie entre au moins deux pièces mobiles l'une par rapport à l'autre, qui comprend une pluralité d'éléments de couplage électromagnétiques dont le champ proche réalise la transmission par contact, et qui comprend un support (1) sur l'une des pièces mobiles qui présente sur un côté une surface de masse et sur l'autre côté des éléments de couplage prenant la forme d'éléments plans conducteurs électriques (3a, 3b, 3c), qui sont reliés entre eux dans un montage en cascade par un réseau de lignes (2), et qui forment des capacités avec la surface de masse conductrice électrique,
**caractérisé en ce que** les capacités forment avec les inductances du réseau de lignes une caractéristique passe-bas et l'ensemble de la disposition est terminée sans réflexion, et **en ce qu'**en outre chaque élément de couplage est un système résonant avec une fréquence de résonance supérieure à la fréquence des signaux à transmettre.

2. Dispositif selon la revendication 1, **caractérisé en ce que** les inductances et capacités sont réalisées sous la forme de structures d'une plaquette de circuits.

3. Dispositif selon la revendication 2, **caractérisé en ce que** la plaquette de circuits est une plaquette flexible.

4. Dispositif selon l'une quelconque des revendications 1 à 3, **caractérisé en ce que** la structure de conducteurs dans son ensemble n'est pas capable de résonance.

5. Dispositif selon l'une quelconque des revendications 1 à 4, **caractérisé en ce qu'**une ligne continue forme les différentes inductances de chaque élément de couplage.

6. Dispositif selon l'une quelconque des revendications 1 à 5, **caractérisé en ce que** les capacités sont conformées comme des éléments conducteurs plats qui sont reliés par des lignes de branchement à la ligne continue ou se raccordent directement à celle-ci.

7. Dispositif selon la revendication 6, **caractérisé en ce que** des éléments conducteurs plats sont prévus de part et d'autre de la ligne continue.

8. Dispositif selon la revendication 2 ou 3, **caractérisé en ce que** la plaquette de circuits présente des fentes.

9. Dispositif selon l'une quelconque des revendications 1 à 8, **caractérisé en ce que** les inductances et/ou les capacités sont des éléments discrets.

10. Dispositif selon l'une quelconque des revendications 1 à 9, **caractérisé en ce que** plusieurs résonateurs ajustés dans des plages de fréquence différentes sont disposés à proximité les uns des autres dans l'espace, de sorte qu'il se crée une structure de résonateur ajustée à ces plages de fréquence.

11. Dispositif selon l'une quelconque des revendications 1 à 10, **caractérisé en ce que** la construction est symétrique.

12. Dispositif selon l'une quelconque des revendications 1 à 11, **caractérisé en ce qu'**il est prévu de part et d'autre d'une plaquette de circuits des structures de conducteurs avec une surface de masse, des capacités et/ou des inductances.

13. Dispositif selon l'une quelconque des revendications 1 à 12, **caractérisé en ce que** les éléments de couplage sont conformés comme des éléments de couplage différentiel et **en ce qu'**un signal de différence est appliqué aux éléments de couplage.

14. Dispositif selon l'une quelconque des revendications 1 à 13, **caractérisé en ce qu'**il est prévu sur toutes les pièces des éléments de couplage capables de résonance et adaptés les uns aux autres.

15. Dispositif selon l'une quelconque des revendications 1 à 14, **caractérisé en ce qu'**il est prévu sur une seule pièce des éléments de couplage capables de résonance et **en ce qu'**il est prévu sur les autres pièces des émetteurs et récepteurs courants servant d'éléments de couplage.

16. Dispositif selon la revendication 15, **caractérisé en ce que** les émetteurs et récepteurs présentent des enroulements, des tores de ferrite et/ou des condensateurs.

17. Dispositif selon l'une quelconque des revendications 1 à 16, **caractérisé en ce que** les systèmes de lignes servant à l'arrivée des signaux ou de l'énergie à transmettre ou à la transmission des signaux ou de l'énergie transmis sont blindés et sont ainsi découplés des éléments de couplage.

18. Dispositif selon l'une quelconque des revendications 1 à 17, **caractérisé en ce qu'**il est prévu au moins une unité d'activation qui n'est activée que lorsque les éléments de couplage d'une partie en mouvement relatif s'approchent de l'élément de couplage en question.

19. Dispositif selon l'une quelconque des revendications 1 à 18, **caractérisé en ce que** les résonateurs sont conçus de façon à n'adapter leurs caractéristiques électriques à leur point de fonctionnement que par les propriétés diélectriques ou magnétiques d'un résonateur qui s'en approche.

20. Dispositif selon l'une quelconque des revendications 1 à 19, **caractérisé en ce que** le couplage des éléments de couplage au système de lignes est réalisé par des composants actifs ou passifs supplémentaires tels que des amplificateurs et/ou des commutateurs à semi-conducteurs.

21. Dispositif selon l'une quelconque des revendications 1 à 20, **caractérisé en ce que** les éléments de couplage sont protégés de l'environnement par un blindage fait de matériau conducteur électrique.

22. Dispositif selon l'une des revendications 1 à 21, **caractérisé en ce que** les éléments de couplage sont alimentés par un élément de commutation ou d'amplification.

23. Dispositif selon l'une quelconque des revendications 1 à 22, **caractérisé en ce que** les pièces mobiles les unes par rapport aux autres effectuent un mouvement de rotation.

24. Dispositif selon l'une quelconque des revendications 1 à 23, **caractérisé en ce que** les pièces mobiles les unes par rapport aux autres effectuent un mouvement de translation.

25. Dispositif selon l'une quelconque des revendications 1 à 24, **caractérisé en ce que** chaque élément de couplage capable de résonance est formé par un composant qui contient au organe ayant un effet inductif et un autre ayant un effet capacitif.

26. Dispositif selon la revendication 25, **caractérisé en ce que** chaque élément de couplage se compose d'une seule inductance et d'une seule capacité.

27. Dispositif selon la revendication 25, **caractérisé en ce que** les différentes inductances des éléments de couplage sont montées en série.
